# EUROPÄISCHE PATENTANMELDUNG

(11) **EP 2 387 136 A2**
(43) Veröffentlichungstag der Anmeldung: **16.11.2011**
(21) Anmeldenummer: 11163833.4
(22) Anmeldetag: 27.04.2011
(51) Int. Cl.: H02K 15/04

(54) **Pressmodul für imprägnierte Leiterstäbe grosser elektrischer Maschinen sowie damit ausgerüstete Pressvorrichtung**

(30) Priorität: 10.05.2010 DE 102010020100; 18.02.2011 DE 102011011556
(71) Anmelder: Alstom Hydro France, 92300 Levallois Perret (FR)
(72) Erfinder: Roos, Sascha, 5430, Wettingen (CH); Schmid, Matthias, 5413, Birmenstorf/AG (CH); Frei, Michael, 5022, Rombach (CH); Sicker, Martin Emanuel, 5412, Gebenstorf (CH); Kamber, Thomas, 4054, Basel (CH)
(74) Vertreter: Dimper, Dieter

(57) **Zusammenfassung**

Gegenstand der Erfindung sind ein Pressmodul zum Formpressen und Aushärten imprägnierter Leiterstäbe für große elektrische Maschinen, wie beispielsweise Hydrogeneratoren, das sich durch ein verbessertes Schließsystem zum Aufbringen des Anpressdruckes auszeichnet sowie eine damit ausgerüstete Pressvorrichtung, deren Handhabung mit einem deutlich reduzierten Arbeitsaufwand verbunden ist.

Ein erfindungsgemäßes Pressmodul (1) umfasst eine Presswanne (2) zum Aufbringen einer horizontalen Anpresskraft und ein Pressjoch (3) zum Aufbringen einer vertikalen Anpresskraft. Die Schließeinheiten (6) und (7) zum Aufbringen der horizontalen und vertikalen Anpresskräfte umfassen dabei ein Gehäuse (20), welches einen darin gleitend gelagerten Anpresskolben (21) aufnimmt, der in Wirkverbindung mit einem axial fixierten, drehbaren Gewindebolzen (27) dergestalt steht, dass eine Drehbewegung des Gewindebolzens (27) eine Axialbewegung des Anpresskolbens (21) bewirkt. Ein sich auf einem Federpaket (35) abstützendes Axiallager (3) sorgt für eine elastische Lagerung des Anpresskolbens (21). Auf der Rückseite des Gehäuses (20) ragt der Gewindebolzen (27) heraus und ist dort mit einer Kontur (36) zur Aufnahme eines Werkzeugs, beispielsweise eines Pneumatikschraubers ausgestattet.

## Beschreibung

### Technisches Gebiet

Die vorliegende Erfindung betrifft ein Pressmodul zum Formpressen und Aushärten imprägnierter Leiterstäbe für grosse elektrische Maschinen, wie beispielsweise Hydrogeneratoren, das sich durch ein verbessertes Schließsystem zum Aufbringen des Anpressdruckes auszeichnet. Weiterhin betrifft die Erfindung eine damit ausgerüstete Pressvorrichtung.

### Stand der Technik

Es ist bekannt, die Leiterstäbe grosser elektrischer Maschinen mit einem Isolationsmaterial, insbesondere einem Glimmerband, zu umwickeln und anschliessend mit einem aushärtbaren Harz zu imprägnieren. Zum Zwecke der Aushärtung werden die dergestalt behandelten Leiterstäbe in eine Pressvorrichtung eingelegt, in der sie auf die gewünschte Geometrie gepresst werden. Die Pressvorrichtung umfasst eine Anzahl von Modulen, bestehend aus horizontalen und vertikalen Presseinheiten, welche die imprägnierten Leiterstäbe auf Form pressen.

Um den während des Aushärtens auftretenden Volumenschwund auszugleichen, müssen die Presseinheiten ständig nachjustiert werden, um das Entstehen von Lufteinschlüssen innerhalb der Isolation zu vermeiden, denn Lufteinschlüsse würden die Leiterstäbe unbrauchbar machen.

Diese Aufgabe wird nach dem Stand der Technik mittels Keilen gelöst, die regelmässig in Handarbeit mittels Kupferhämmern zwischen Rahmen und Pressstempel eingetrieben werden. Bei grösseren Vorrichtungen werden von Zeit zu Zeit Zwischenstücke zwischen Keil und Stempel eingefügt, um grössere Längendifferenzen auszugleichen.

Diese Arbeiten sind mit einem hohen Personalaufwand verbunden und daher sehr kosten- und zeitaufwändig.

Auch ist die Dosierung der aufzubringenden Anpresskräfte bei diesem Verfahren sehr schwierig zu bewerkstelligen und allein von der Erfahrung des damit befassten Personals abhängig.

Außerdem besteht die latente Gefahr, dass beim Hämmern absplitternde Metallteile in die Isolierung der Leiterstäbe einschlagen und damit zu einer Beschädigung derselben führen. Auch dies kann zu einem Unbrauchbarwerden der fertigen Leiterstäbe führen, zumindest aber aufwändige Nacharbeiten derselben erfordern.

### Darstellung der Erfindung

Der Erfindung liegt die Aufgabe zugrunde, ein Pressmodul für eine Pressvorrichtung zum Aushärten imprägnierter Leiterstäbe für grosse elektrische Maschinen dahingehend weiterzuentwickeln, dass die vorgenannten Nachteile vermieden werden, indem auf den Einsatz von Keilen zum Aufbringen der notwendigen Anpresskräfte gänzlich verzichtet wird. Dabei müssen die eingesetzten Komponenten den rauhen Bedingungen des betrieblichen Einsatzes gewachsen sein.

Erfindungsgemäss wird dies durch ein Pressmodul und eine Pressvorrichtung der in den unabhängigen Ansprüchen genannten Art gelöst. Günstige Ausführungsarten der Erfindung sind den abhängigen Ansprüchen und der Beschreibung in Verbindung mit den Zeichnungen zu entnehmen.

Der Grundgedanke der Erfindung besteht darin, das gattungsgemässe Pressmodul mit neuen horizontal und vertikal wirkenden Schließeinheiten auszustatten, deren bewegliche Komponenten weitgehend der Einwirkung verunreinigender Imprägnierharze entzogen sind.

Um dies zu gewährleisten, umfassen die Schließeinheiten ein fest mit der jeweiligen Tragstruktur verbundenes Gehäuse, welches einen gleitend gelagerten Anpresskolben aufnimmt, der in Wirkverbindung mit einem axial federnd gelagerten, drehbaren Gewindebolzen innerhalb des Gehäuses steht, so dass eine Drehbewegung des Gewindebolzens eine Axialbewegung des Anpresskolbens bewirkt.

Eine derart konzipierte Schließeinheit erlaubt einen gänzlichen Verzicht auf den Einsatz von Keilen zur Aufbringung der Anpresskräfte unter Vermeidung der vorgenannten Nachteile. Darüber hinaus ermöglichen solcherart aufgebaute Schließeinheiten den Einsatz von Drehmomentenmessern zur Aufbringung definierter Anpresskräfte.

Ergänzend wird angeregt, den Gewindebolzen und damit den Anpresskolben in axialer Richtung federnd zu lagern. Dadurch können Belastungsspitzen abgefangen und die Gefahr einer unregelmässigen Druckbeaufschlagung der Leiterstäbe zusätzlich abgemildert werden.

Dies wird erfindungsgemäß erreicht, indem die Buchse eines Axiallagers, das die von dem Anpresskolben aufzubringende Kraft in das Gehäuse einleitet, elastisch gelagert ist, beispielsweise auf einem Tellerfederpaket. Durch das Tellerfederpaket wird dem Schließsystem eine gewisse Elastizität verliehen, so dass es bei grösseren Ausdehnungen, wenn sich der imprägnierte Leiterstab gesetzt hat, elastisch nachdrückt. Auf diese Weise ist gewährleistet, dass auch bei einem stärkeren Schrumpfen der Leiterstäbe als erwartet oder einem zu späten Nachjustieren der Schließeinheit dennoch eine Druckkraft aufrechterhalten bleibt. Neben dieser garantierten Pressung werden durch diese Massnahme auch Spannungsspitzen, beispielsweise infolge Wärmeausdehnung, abgebaut und somit die Gefahr einer Überlastung vermindert.

Weitere Vorteile und Einzelheiten des erfindungsgemässen Pressmoduls sind den abhängigen Patentansprüchen und dem nachfolgenden Ausführungsbeispiel unter Hinzuziehung der Zeichnungen zu entnehmen.

Es zeigen
- Figur 1: den Aufbau einer modulartig zusammengesetzten Pressvorrichtung (ohne eingelegte Leiterstäbe);
- Figur 2: Pressvorrichtung mit eingelegten Distanzbalken und -leisten,
- Figur 3: den Aufbau der horizontalen Presseinrichtung,
- Figur 4a,b,c: den Aufbau der vertikalen Presseinrichtung,
- Figur 5a, b: eine Schließeinheit zum Aufbringen der Anpresskraft im Längsschnitt.

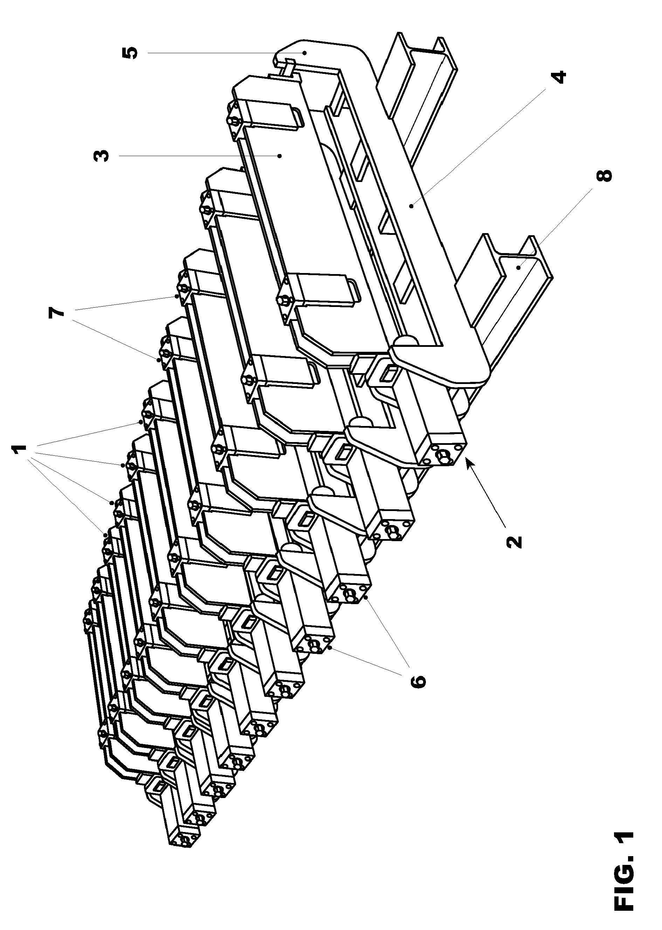

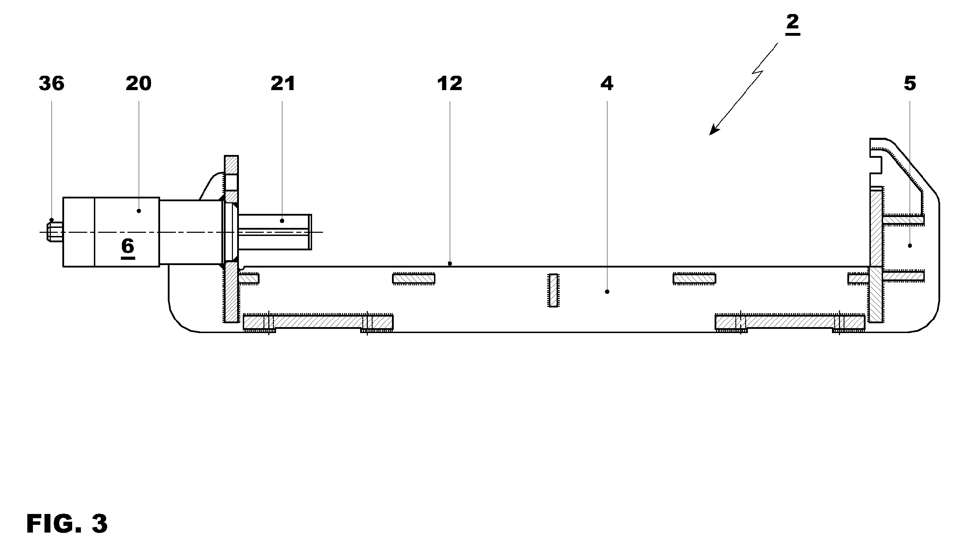

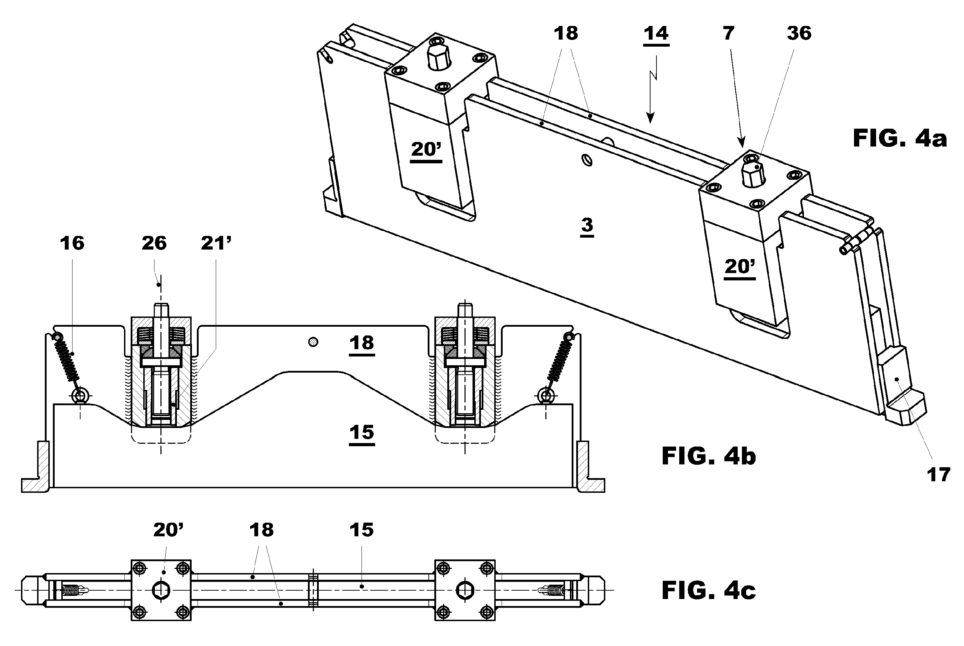

Der grundlegende Aufbau einer Pressvorrichtung zum Formpressen imprägnierter Leiterstäbe ist in Figur 1 wiedergegeben. Wie die Figur eindrücklich verdeutlicht, ist diese Pressvorrichtung modulartig aufgebaut und setzt sich aus einer Anzahl einzelner Pressmodule (1) zusammen. Jedes Pressmodul (1) umfasst zunächst zwei Hauptbestandteile, nämlich eine erste Presseinrichtung (2) zum Einleiten einer horizontal gerichteten Anpresskraft in den Leiterstab und eine zweite Presseinrichtung (3) zum Einleiten einer vertikal gerichteten Anpresskraft. Auf deren konkreten Aufbau wird im Zusammenhang mit den Figuren 3 und 4 näher eingegangen.

Die erste - horizontale - Presseinrichtung (2) dient der Aufnahme der formzupressenden Leiterstäbe. Sie besteht aus einem Rahmengestell mit einer horizontalen Basis (4), die an ihren beiden Enden von senkrecht darauf stehenden Stegen (5) begrenzt ist. Basis (4) und Stege (5) können homogen aus einem Stück gegossen sein oder aus mehreren Elementen, die beispielsweise durch Schweißen miteinander verbunden sind, zusammengesetzt sein. Ihrer Form und Funktion wegen sei die horizontale Presseinrichtung (2) nachfolgend als Presswanne (2) bezeichnet. Auf den von den Stegen (5) begrenzten Basisabschnitt (4), dem Wannenboden (12), werden die zu verpressenden Leiterstäbe einschließlich der erforderlichen Hilfsmittel voneinander beabstandet abgelegt. Die Presswanne (2) ist so auszulegen, dass sie zum einen das Gewicht der Leiterstäbe und Hilfsmittel aufzunehmen vermag und zum anderen die durch den Pressvorgang eingeleiteten Zug- und Biegekräfte.

Wie aus Fig. 1 sehr deutlich zu erkennen ist, sind die Schließeinheiten (6) zum Aufbringen der horizontalen Anpresskräfte an den seitlichen Stegen (5) der Presswanne (2) angebracht.

In Wirkverbindung mit der Presswanne (2) steht die vertikale Presseinrichtung (3), nachfolgend als Pressjoch (3) bezeichnet. Das Pressjoch (3) überspannt die Presswanne (2). Seine Aufgabe ist es, die vertikale Anpresskraft in die Leiterstäbe einzuleiten. Das Pressjoch (3) ist fest auf die Presswanne (2) aufgesetzt. Es ist mit wenigstens einer vertikal wirkenden Schließeinheit (7) bestückt.

Im Interesse eines gleichmässigen Presskrafteintrags hat sich die Anordnung von zwei Schließeinheiten (7) auf dem Pressjoch (3) als günstig erwiesen. Im Interesse einer leichten Zugänglichkeit für das Bedienungspersonal sind diese beidseitig möglichst weit aussen angebracht.

Für den betrieblichen Einsatz wird eine Anzahl von Modulen (1), jedes bestehend aus Presswanne (2) und Pressjoch (3), zu einer Pressvorrichtung zusammengesetzt. Die Anzahl der zusammenzustellenden Module hängt von der Länge der zu behandelnden Leiterstäbe ab. Üblich sind fünf bis 15 Module, die in einem Abstand von 250 mm bis 400 mm (gemessen Mitte - Mitte), vorzugsweise etwa 300 mm zwischen benachbarten Modulen aufgestellt werden. Die Ausführungsform in Figur 1 zeigt eine aus zehn Modulen (1) zusammengesetzte Pressvorrichtung.

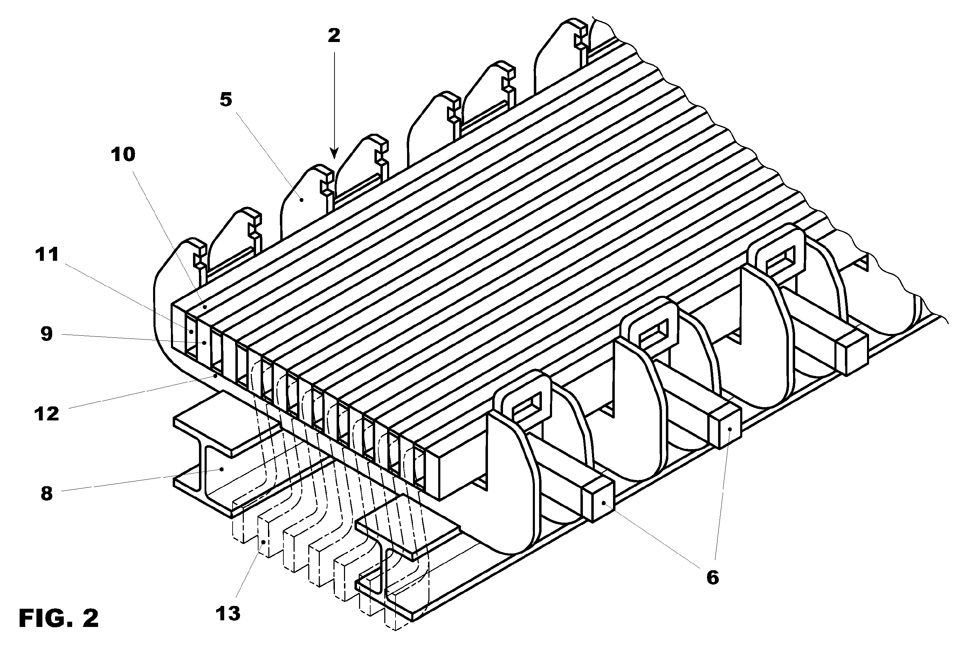

Aus der perspektivischen Ansicht gemäß Figur 2 ist ersichtlich, wie die Leiterstäbe (13) in der Pressvorrichtung angeordnet sind. Die Pressmodule (1) sind auf einer vorzugsweise transportablen Trägerstruktur (8) zu einer Pressvorrichtung für imprägnierte Leiterstäbe (13) zusammengestellt. Der besseren Übersicht halber beschränkt sich diese Darstellung auf die Wiedergabe der Presswannen (2). Die Pressjoche (3) sind weggelassen.

Auf dem Wannenboden (12) der Presswanne (2) liegen parallel und beabstandet voneinander Distanzbalken (9) auf. Zwischen den beabstandeten Distanzbalken (9) befinden sich Distanzleisten (10), deren Breite der Sollbreite der formzupressenden Leiterstäbe (13) entspricht. Der von den Distanzbalken (9) und Distanzleisten (10) umgrenzte Hohlraum (11) nimmt die Leiterstäbe (13) auf. In seinen Abmessungen entspricht er dem Sollquerschnitt des Leiterstabs (13).

In Entsprechung der Dimensionierung der Leiterstäbe (13) sind daher Distanzbalken (9) und Distanzleisten (10) angepasster Dimensionierung vorzuhalten. Jede Leiterstabausführung verlangt nach einer speziell angepassten Dimensionierung dieser Hilfsmittel (9, 10).

Im betrieblichen Einsatz der Pressvorrichtung leiten die horizontalen Schließeinrichtungen (6) über die Distanzbalken (9) eine Anpresskraft in die Leiterstäbe (13) ein, während die vertikalen Schließeinrichtungen (7) des Pressjochs (3) die Distanzleisten (10) mit einer Anpresskraft beaufschlagen.

In Figur 3 ist im Querschnitt eine Presswanne (2) dargestellt. Die wesentlichen Komponenten der Presswanne (2) sind ein U-förmiges Rahmengestell mit einem horizontalen Basisabschnitt (4), dessen Enden von zwei senkrecht darauf stehenden Stegen (5) begrenzt werden. Einer der Stege (5) nimmt die Schließeinheit (6) zur Aufbringung der horizontalen Anpresskraft auf. In der Figur sichtbar ist das Gehäuse (20) der Schließeinheit (6) mit dem Anpresskolben (21), welcher während des Betriebs des Pressmoduls (1) über die auf dem Wannenboden (12) ruhenden Distanzbalken (9) auf die Leiterstäbe (13) einwirkt.

Das Gehäuse (20) ist fest mit dem Steg (5) verbunden, vorzugsweise durch eine Schweißverbindung. Für die Auslegung des Rahmens der Presswanne (2) sind die erheblichen von der Schließeinheit (6) in das System eingebrachten Kräfte zu berücksichtigen.

Die Presswanne (2) wird in ihrer gesamten Breite von dem Pressjoch (3) überspannt, dessen Einzelheiten in den Figuren 4a, 4b, 4c zu erkennen sind. Zwei voneinander beabstandet angeordnete Jochbleche (18) bilden das Joch (14). Innerhalb des von den beabstandeten Jochblechen (18) gebildeten Zwischenraums ist an Zugfedern (16) ein Pressbalken (15) derart beweglich eingehängt, dass er bei Beaufschlagung mit einer entsprechenden Kraft entgegen der Federwirkung nach unten aus dem Joch (14) austreten kann. Bei Nachlassen der einwirkenden Kraft ziehen die Zugfedern (16) den Pressbalken (15) wieder zurück in das Joch (14).

Zwei Gehäuse (20') der Schließeinheit (7) sind in dem jeweils äußeren Drittel mit den Jochblechen (18) verschweißt. Entlang einer vertikal verlaufenden Längsachse (26) des Gehäuses (20') ragt ein axial verschiebbarer Anpresskolben (21') in den von den Jochblechen (18) gebildeten Zwischenraum hinein. Durch ein Ausfahren des Anpresskolbens (21') wird der Pressbalken (15) mit einer Kraft beaufschlagt und gleitet entgegen der Wirkung der Zugfedern (16) nach unten in Richtung der Presswanne (2).

Beim bestimmungsgemäßen Gebrauch des Pressmoduls (1) ist die Wanne (2) mit zu verpressenden Leiterstäben (13) beladen. Wie in Verbindung mit Figur 2 bereits behandelt, werden als Hilfsmittel zum Formpressen der Leiterstäbe (13) Distanzbalken (9) und Distanzleisten (10) eingesetzt, die in ihren Abmessungen der Dimension der fertigen Leiterstäbe (13) angepasst sind. Auf dem Wannenboden (4) sind, alternierend zu den Leiterstäben (13), Distanzbalken (9) zur seitlichen Begrenzung der Leiterstäbe (13) abgelegt, während die Distanzleisten (10) die Leiterstäbe (13) unten und oben begrenzen. Somit bestimmen die Distanzbalken (9) die Dimension der Stabhöhe, während die Distanzleisten (10) die Stabbreite festlegen. Über die Distanzleisten (10) bringt der von den Anpresskolben (21') beaufschlagte Pressbalken (15) die vertikale Anpresskraft auf die Leiterstäbe (13) auf.

Um die von der Schließeinheit (7) eingeleiteten Kräfte aufnehmen zu können, bedarf es einer adäquaten Verbindung der Tragstruktur des Pressjochs (3) mit der Presswanne (2). Zu diesem Zwecke sind an den Außenkanten der Jochbleche (18) Winkelelemente (17) zur formschlüssigen Verbindung von Pressjoch (3) und Presswanne (2) angebracht. Die nach außen abgewinkelten Schenkel der Winkelelemente (17) greifen in angepasste Aussparungen an den Stegen (5) ein. Indem die Winkelelemente (17) mit den beabstandeten Jochblechen (18) verschweißt sind, leisten sie gleichzeitig einen Beitrag zur mechanischen Integrität des Jochs (14).

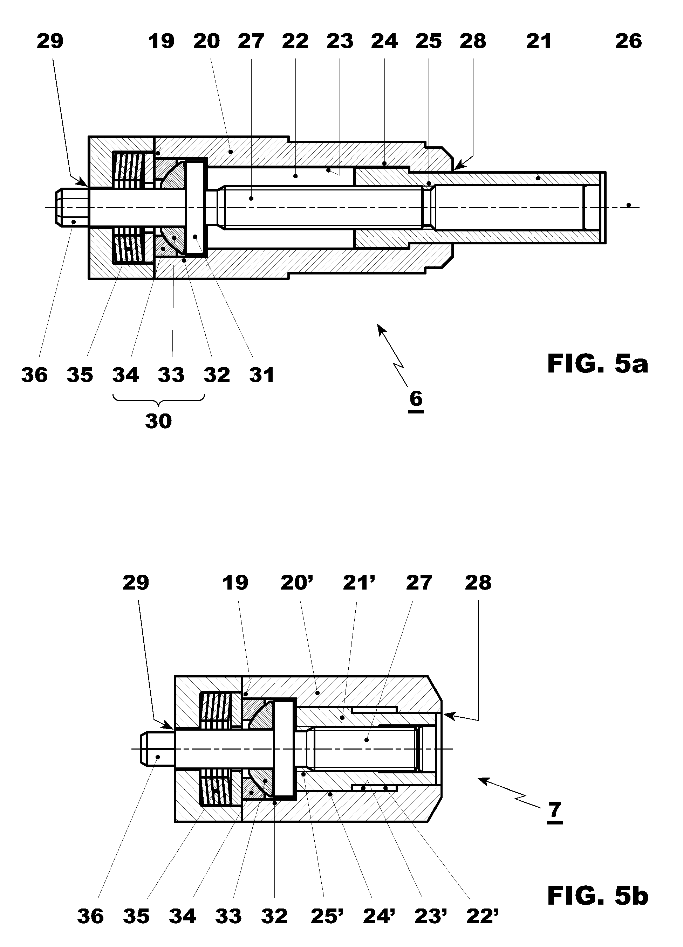

Der Aufbau einer Schließeinheit (6) oder (7) ist den Figuren 5a oder 5b zu entnehmen. Über das Gehäuse (20, 20') ist die Schließeinheit (6, 7) mit dem jeweiligen Rahmenelement des Pressmoduls (1), also dem Steg (5) der Presswanne (2) im Falle der horizontal wirkenden Schließeinheit (6) und mit den Jochblechen (18) des Pressjochs (3) im Falle der vertikal wirkenden Schließeinheit (7), verbunden.

Das Gehäuse (20, 20') umschließt einen inneren Hohlraum (22, 22') mit einer Innenkontur (23, 23') und einer Mittelachse (26). An seinen beiden Längsenden erfährt der Hohlraum (22, 22') eine Querschnittsverringerung und bildet auf der Mittelachse (26) je eine Durchgangsöffnung (28) und (29) durch die vordere und die hintere Stirnseite des Gehäuses (20, 20').

In dem Hohlraum (22, 22') ist ein Anpresskolben (21, 21') gleitend gelagert, wobei die Außenkontur (24, 24') des Anpresskolbens (21, 21') mit der Gehäuseinnenkontur (23, 23') in Reibkontakt steht. Über die Durchgangsöffnung (28) ist der Anpresskolben (21, 21') aus dem Gehäuse (20, 20') ausfahrbar.

Der Querschnittssprung am Übergang vom Hohlraum (22, 22') zu der Durchgangsöffnung (28) dient gleichzeitig als Anschlag zur Begrenzung des Ausfahrweges. Dies verhindert ein unbeabsichtigtes Herausdrehen oder -fallen des Anpresskolbens (21, 21').

Der Anpresskolben (21, 21') besitzt im Bereich der Mittelachse (26) eine Gewindebohrung (25, 25'). Dabei kann es sich um eine Durchgangsbohrung handeln. Im Interesse einer verminderten Gefahr des Eindringens von Schmutz gilt einer Ausführung der Gewindebohrung (25, 25') als Sackloch aber der Vorzug. In jedem Falle ist zu gewährleisten, dass die Länge des Gewindes der Gewindebohrung (25, 25') mindestens dem zu erbringenden Ausfahrweg des Anpresskolbens (21, 21') entspricht.

Der Anpresskolben (21, 21') steht in Wirkverbindung mit einem Gewindebolzen (27, 27'), welcher drehbeweglich im Gehäuse (20, 20') gelagert ist. Seine Drehachse liegt auf der Mittelachse (26). An seinem vorderen, innerhalb des Gehäuses (20, 20') befindlichen Teil ist er mit einem Gewinde, beispielsweise einem Trapezgewinde, versehen, mit Hilfe dessen er in die Gewindebohrung (25, 25') des Anpresskolbens (21, 21') eindrehbar ist. Im eingedrehten Zustand ist der Gewindebolzen (27, 27') damit an seinem vorderen Ende auch radial festgelegt, das heißt, der Anpresskolben (21, 21') fungiert damit gleichzeitig als ein Radiallager für den Gewindebolzen (27, 27').

Das entgegengesetzte Ende des Gewindebolzens (27, 27') durchdringt die zweite Durchgangsöffnung (29) und ragt aus der hinteren Stirnseite des Gehäuses (20, 20') heraus. In diesem Bereich ist der Gewindebolzen (27, 27') mit einer Kontur (36) zur Aufnahme eines Drehmomentenschlüssels, eines Pneumatikschraubers oder eines vergleichbaren Werkzeugs zum Aufbringen einer Drehbewegung ausgestattet. Hierbei bieten sich zahlreiche Formen an, wie Außensechskant, -vierkant, Innensechskant usw.

Damit eine Drehbewegung des in den Anpresskolben (21, 21') eingedrehten Gewindebolzens (27, 27') in eine Axialbewegung des Anpresskolbens (21, 21') umgewandelt wird, muss ein Mitdrehen des letzteren verhindert werden. Dies kann auf verschiedenerlei Art erfolgen. Eine Alternative besteht darin, der Innenkontur (23, 23') des Gehäusehohlraums (22, 22') und der Außenkontur (24, 24') des Anpresskolbens (21, 21') eine von der Kreisform abweichende, beispielsweise eine rechteckige, Querschnittsform zu verleihen.

Alternativ kann bei kreisförmig ausgeführtem Kolben (21, 21') die Innenkontur des Hohlraums (22, 22') oder der Durchgangsöffnung (28, 28') mit einer längsverlaufenden Nut versehen sein, in die ein komplementär ausgeformter Vorsprung auf der Kolbenkontur (24, 24') - oder umgekehrt - eingreift.

Zur axialen Fixierung stützt sich der Gewindebolzen (27, 27') in seinem hinteren Bereich in einem Axiallager (30) ab. Eine Komponente desselben umfasst eine scheibenähnliche Querschnittserweiterung (31), die in einer Ausnehmung (32) der Gehäuseinnenkontur (23, 23') umläuft. Ein solches sehr einfach gestaltetes Axiallager genügt ohne weiteres den Anforderungen an eine axiale Fixierung des Gewindebolzens (27, 27') in Wirkrichtung der Anpresskraft. In entgegengesetzter Richtung jedoch muss das Axiallager (30) die in die formzupressenden Leiterstäbe eingeleitete Anpresskraft aufnehmen, die bis zu 150 kN betragen kann. Derartige Beanspruchungen bedürfen einer adäquaten Ausgestaltung des Axiallagers (30). Bewährt hat sich an dieser Stelle ein selbstzentrierendes Axialgleitlager, bei welchem eine sphärisch ausgebildete Abstützkontur (33) der Scheibe (31) in einer komplementär geformten Lagerbuchse (34) reibt. Als Werkstoff für diese beiden Lagerkomponenten (33) und (34) drängt sich eine Bronzelegierung in Verbindung mit einer PTFE-Beschichtung auf.

Darüber hinaus nimmt das Axiallager (30) die Funktion einer radialen Führung des Gewindebolzens (27, 27') wahr und fungiert damit gleichzeitig als dessen zweites Radiallager.

Praktische Erfahrungen mit herkömmlichen Pressvorrichtungen haben gezeigt, dass bei einem allfälligen Abfallen des Anpressdrucks, so infolge eines unsachgemäßen Umgangs mit den Schließeinrichtungen, Luft in die imprägnierte Leiterstabisolation nachgezogen wird mit der Konsequenz einer Minderung der Qualität des Endprodukts oder gar dessen Unbrauchbarkeit. Um diesem Übelstand abzuhelfen, hat es sich als vorteilhaft erwiesen, den Anpresskolben (21, 21') elastisch zu lagern. Diese gewünschte Wirkung wird erfindungsgemäß durch eine zweckmäßige Ausführung des Axiallagers (30) des Gewindebolzens (27, 27') umgesetzt. So ist die Axiallagerbuchse (34) nicht starr fixiert, sondern gleitend innerhalb der Ausnehmung (32) gelagert. Dabei stützt sie sich auf einem Tellerfederpaket (35) ab. Bei einer Belastung des Anpresskolbens (21, 21') gleitet die Lagerbuchse (34) abhängig von der durch den Anpresskolben (21, 21') eingeleiteten Kraft und der Auslegung des Federpakets (35) um einen Federweg Δ auf das Federpaket (35) zu. Lässt die Belastung des Anpresskolbens (21, 21') nach, fährt er um maximal diesen Federweg Δ wieder aus. Auf diese Weise bleibt bei einer Schrumpfung der Leiterisolation auch ohne aktives Nachstellen des Anpresskolbens (21, 21') die Anpresskraft erhalten. Die Wahrscheinlichkeit von Lufteinschlüssen in der Isolation wird dadurch deutlich vermindert.

Ein Anschlag (19) begrenzt den Federweg und hält das Federpaket (35) unter Vorspannung.

Die Schließeinheiten (6) und (7) an der Presswanne (2) und am Pressjoch (3) beruhen prinzipiell auf der gleichen Bauart. Lediglich kann es sinnvoll sein, gewisse Modifikationen im Hinblick auf unterschiedlich weite Ausfahrwege der Anpresskolben (21, 21') vorzusehen, was sich in erster Linie in der Dimensionierung der beteiligten Komponenten niederschlägt.

Da die horizontale Schließeinheit (6) auf eine Vielzahl - in Wirkrichtung der Presskraft gesehen - hintereinander angeordnete Leiterstäbe einwirkt, beispielsweise zehn Leiterstäbe, resultiert der zu absolvierende Ausfahrweg des horizontalen Anpresskolbens (21) aus der Summe der zu kompensierenden Schrumpfungswerte der beispielsweise zehn innerhalb eines Arbeitszyklusses zu beaufschlagenden Leiterstäbe. Demgegenüber wirkt der Pressbalken (15) des Pressjochs (3) nur auf "eine Lage" Leiterstäbe ein. In der Konsequenz ist daher für die horizontale Schließeinheit (6) ein deutlich längerer Ausfahrweg erforderlich als für die vertikale (7). Diesem Umstand kann durch eine modifizierte Bauweise der Schließeinheiten (6) und (7) Rechnung getragen werden. Die mit "'" apostrophierten Bezugszeichen weisen auf unterschiedlich ausgelegte Komponenten hin.

In Figur 5b ist eine Version einer Schließeinheit (7) mit einem verkürzten Ausfahrweg des Anpresskolbens (21'), wie sie vorzugsweise für die vertikale Schließeinheit (7) zum Einsatz gelangt, angegeben.

Während die Darstellung gemäss Figur 5a den Anpresskolben (21) in voll ausgefahrenem Zustand wiedergibt, zeigt Figur 5b einen eingefahrenen Anpresskolben (21').

### Bezugszeichenliste

- 1: Pressmodul
- 2: Presswanne
- 3: Pressjoch
- 4: Basisabschnitt der Presswanne (2)
- 5: Seitenstege der Presswanne (2)
- 6: Schließeinheit zum Aufbringen der horizontalen Presskräfte
- 7: Schließeinheit zum Aufbringen der vertikalen Presskräfte
- 8: Träger
- 9: Distanzbalken
- 10: Distanzleisten
- 11: Hohlraum zur Aufnahme der Leiterstäbe
- 12: Wannenboden
- 13: Leiterstab
- 14: Joch
- 15: Pressbalken
- 16: Zugfeder
- 17: Winkelelement
- 18: Jochblech
- 19: Anschlag für das Federpaket (35)
- 20: Gehäuse
- 21: Anpresskolben
- 22: Hohlraum im Gehäuse (20)
- 23: Innenkontur von Hohlraum (22)
- 24: Außenkontur von Kolben (21)
- 25: Gewindebohrung
- 26: Mittelachse
- 27: Gewindebolzen
- 28: Durchgangsöffnung in (20) für (21)
- 29: Durchgangsöffnung in (20) für (27)
- 30: Axiallager
- 31: Querschnittserweiterung an (27)
- 32: Ausnehmung in (22)
- 33: Abstützkontur
- 34: Lagerbuchse
- 35: Tellerfederpaket
- 36: Kontur zur Aufnahme eines Werkzeugs, z.B. Sechskant

## Patentansprüche

1. Pressmodul (1) für eine Pressvorrichtung zum Formpressen imprägnierter Leiterstäbe für große elektrische Maschinen, beispielsweise Hydrogeneratoren, wenigstens umfassend
eine erste Presseinrichtung (2), bestehend aus einem wannenförmigen Rahmengestell mit einem horizontalen Basisabschnitt (4) und zwei äusseren, senkrecht aufragenden Stegen (5) mit wenigstens einer Schließeinheit (6) zum Aufbringen einer Anpresskraft auf wenigstens einen, auf dem Basisabschnitt (4) aufliegenden imprägnierten Leiterstab (13), und
eine zweite Presseinrichtung (3), bestehend aus einem die erste Presseinrichtung (2) überspannenden Joch (14) mit wenigstens einer Schließeinheit (7) zum Aufbringen einer Anpresskraft auf den wenigstens einen auf dem Basisabschnitt (4) aufliegenden imprägnierten Leiterstab (13),
wobei die Wirkrichtungen der von der ersten Presseinrichtung (2) und der von der zweiten Presseinrichtung (3) auf den mindestens einen Leiterstab (13) ausgeübten Anpresskräfte senkrecht zueinander gerichtet sind,
**dadurch gekennzeichnet, dass**
zumindest eine Schließeinheit (6) und/oder (7) ein Gehäuse (20, 20') aufweist, welches einen Hohlraum (22, 22') mit einer Innenkontur (23, 23') umschließt, und ein Anpresskolben (21, 21') mittels einer Außenkontur (24, 24') gleitend an der Innenkontur (23, 23') gelagert ist, und dieser Anpresskolben (21, 21') in seiner Mittelachse (26) eine Gewindebohrung (25) besitzt, welche mit einem innerhalb des Gehäuses (20, 20') drehbeweglich angeordneten, axial fixierten Gewindebolzen (27, 27') kommuniziert, dergestalt, dass eine Drehbewegung des Gewindebolzens (27, 27') eine axiale Bewegung des Anpresskolbens (21, 21') bewirkt, und der Anpresskolben (21, 21') durch eine Durchgangsöffnung (28) aus dem Gehäuse (20, 20') ausfahrbar ist.

2. Pressmodul nach Anspruch 1, **dadurch gekennzeichnet, dass** der Anpresskolben (21) der Schließeinheit (6) der ersten Presseinrichtung (2) - nachfolgend als Presswanne (2) bezeichnet - eine im Wesentlichen horizontale Wirkrichtung besitzt und der Anpresskolben (21') der Schließeinheit (7) der zweiten Presseinrichtung - nachfolgend als Pressjoch (3) bezeichnet - eine im Wesentlichen vertikale Wirkrichtung besitzt.

3. Pressmodul nach Anspruch 2, **dadurch gekennzeichnet, dass** das Pressjoch (3) und die Presswanne (2) lösbar miteinander verbunden sind.

4. Pressmodul nach Anspruch 3, **dadurch gekennzeichnet, dass** das Pressjoch (3) und die Presswanne (2) formschlüssig miteinander verbunden sind.

5. Pressmodul nach Anspruch 1, **dadurch gekennzeichnet, dass** das Joch (14) aus zwei voneinander beabstandeten Jochblechen (18) besteht, wobei in dem Abstand zwischen diesen Jochblechen (18) ein Pressbalken (15) beweglich eingehängt ist.

6. Pressmodul nach Anspruch 5, **dadurch gekennzeichnet, dass** der Pressbalken (15) in Zugfedern (16) des Jochs (14) eingehängt ist.

7. Pressmodul nach Anspruch 5, **dadurch gekennzeichnet, dass** das Gehäuse (20') der wenigstens einen Schließeinheit (7) fest mit den Jochblechen (18) verbunden ist, wobei der Anpresskolben (21') in dem Abstand zwischen diesen Jochblechen (18) auf den Pressbalken (15) einwirkt.

8. Pressmodul nach Anspruch 7, **dadurch gekennzeichnet, dass** das Pressjoch (3) mit zwei Schließeinheiten (7) ausgestattet ist, wobei die beiden Schließeinheiten (7) jeweils im äußeren Drittel des Jochs (14) angeordnet sind.

9. Pressmodul nach Anspruch 5, **dadurch gekennzeichnet, dass** an den Außenkanten der Jochbleche (18) Winkelelemente (17) zur formschlüssigen Verbindung von Pressjoch (3) und Presswanne (2) angeordnet sind.

10. Pressmodul nach Anspruch 1, **dadurch gekennzeichnet, dass** das Gehäuse (20) der wenigstens einen Schließeinheit (6) mit einem der Stege (5) der Presswanne (2) fest verbunden, vorzugsweise verschweißt, ist.

11. Pressmodul nach Anspruch 1, **dadurch gekennzeichnet, dass** das Gehäuse (20, 20') an seiner Rückwand eine Durchgangsöffnung (29) besitzt, durch welche ein Ende des Gewindebolzens (27, 27') aus dem Gehäuse (20, 20') herausragt und dort mit einer Kontur (36) zur Aufnahme eines Werkzeugs zum Aufbringen eines Drehmoments versehen ist.

12. Pressmodul nach Anspruch 11, **dadurch gekennzeichnet, dass** die Kontur (36) zur Aufnahme eines Werkzeugs ein Außensechskant ist.

13. Pressmodul nach Anspruch 11 oder 12, **dadurch gekennzeichnet, dass** das Werkzeug ein Pneumatikschrauber ist.

14. Pressmodul nach Anspruch 1, **dadurch gekennzeichnet, dass** an dem Gewindebolzen (27, 27') innnerhalb des Gehäuses (20, 20') eine scheibenartige Querschnittserweiterung (31) ausgebildet ist, welche in einer Ausnehmung (32) der Gehäuseinnenkontur (23, 23') umläuft.

15. Pressmodul nach Anspruch 14, **dadurch gekennzeichnet, dass** die scheibenartige Querschnittserweiterung (31, 31') des Gewindebolzens (27, 27') auf ihrer vom Anpresskolben (21, 21') abgewandten Seite mit einer sphärisch ausgebildeten Abstützkontur (33) versehen, welche mit einer komplementär ausgebildeten Aussenkung einer Axiallagerbuchse (34) zusammenwirkt.

16. Pressmodul nach Anspruch 15, **dadurch gekennzeichnet, dass** die Axiallagerbuchse (34) elastisch gelagert ist.

17. Pressmodul nach Anspruch 16, **dadurch gekennzeichnet, dass** sich die Axiallagerbuchse (34) auf einem Tellerfederpaket (35) innerhalb des Gehäuses (20, 20') abstützt.

18. Pressmodul nach Anspruch 15, **dadurch gekennzeichnet, dass** die Axiallagerbuchse (34) und die mit ihr zusammenwirkende Abstützkontur (33) aus einer Bronzelegierung bestehen.

19. Pressvorrichtung zum Formpressen imprägnierter Leiterstäbe für große elektrische Maschinen, beispielsweise Hydrogeneratoren, **gekennzeichnet durch** die Anordnung wenigstens zweier Pressmodule (1) gemäß einem oder mehreren der vorstehenden Ansprüche.

20. Pressvorrichtung nach Anspruch 19, umfassend
wenigstens zwei Pressmodule (1), die in Flucht unter Freilassung eines Zwischenabstands angeordnet sind,
eine Anzahl von Distanzbalken (9) und Distanzleisten (10), welche auf dem Wannenboden (12) der wenigstens zwei Pressmodule (1) ruhen,
wobei die Distanzbalken (9) und die Distanzleisten (10) einen rechteckigen Hohlraum (11) zur Aufnahme eines vorgeformten imprägnierten Leiterstabes (13) begrenzen,
wobei die Distanzbalken (9) die Breitseiten der Leiterstäbe (13) und die Distanzleisten (10) die Schmalseiten der Leiterstäbe (13) bedecken,
wobei die Schließeinheiten (6) vermittels ihrer Anpresskolben (21) eine horizontale Anpresskraft auf die Distanzbalken (9) ausüben,
und wobei die Schließeinheiten (7) vermittels Anpresskolben (21') und Pressbalken (15) eine vertikale Anpresskraft auf die Distanzleisten (10) ausüben.

21. Pressvorrichtung nach Anspruch 19 oder 20, **dadurch gekennzeichnet, dass** fünf bis fünfzehn, vorzugsweise acht bis zwölf, insbesondere zehn Pressmodule (1) zu einer Pressvorrichtung zusammengestellt sind.

22. Pressvorrichtung nach einem der Ansprüche 19 bis 21, **dadurch gekennzeichnet, dass** der Abstand zwischen benachbarten Pressmodulen (1) 250 mm bis 400 mm (gemessen Mitte - Mitte), insbesondere etwa 300 mm beträgt.
